# FASCICULE DE BREVET EUROPEEN

(11) **EP 3 211 489 B1**
(45) Date de publication et mention de la délivrance du brevet: **04.01.2023**
(21) Numéro de dépôt: 16156912.4
(22) Date de dépôt: 23.02.2016
(51) Int. Cl.: G04C 3/14

(54) **MODULE MOTEUR SIMPLIFIE**
VEREINFACHTES MOTORMODUL
SIMPLIFIED MOTOR MODULE

(43) Date de publication de la demande: 30.08.2017
(73) Titulaire: ETA SA Manufacture Horlogère Suisse, 2540 Grenchen (CH)
(72) Inventeur: JUFER, Martin, 4917 Melchnau (CH); LAVENU, Yann, 4054 Basel (CH); KRAEHENBUEHL, David Benjamin, 2544 Bettlach (CH)
(74) Mandataire: Collé, Emmanuel

(56) Documents cités:
- EP-A1- 2 615 509
- US-A1- 2015 092 522

## Description

La présente invention concerne un module moteur comprenant un stator sur lequel sont montés un rotor, une bobine et un module électronique.

### ART ANTÉRIEUR

Il est connu actuellement des montres électroniques munies d'aiguilles pour les indications horaires. Ces montres comprennent une base de temps formée d'un quartz pour fournir un signal utilisé comme référence temporelle. Ce signal est transmis à une unité de commande munie d'un microcontrôleur qui lui-même va commander des moteurs électriques de type pas à pas pour mettre en mouvement les aiguilles.

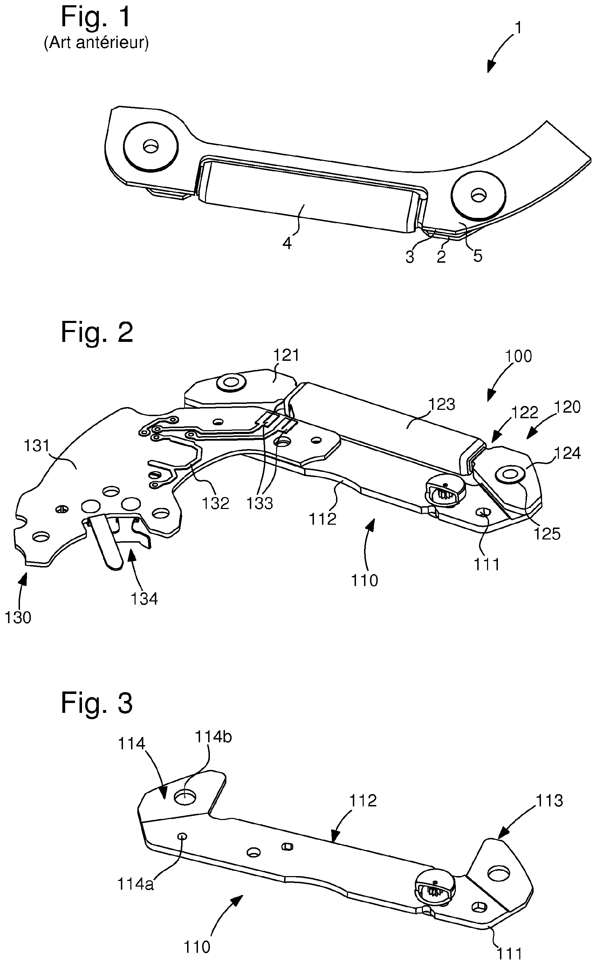

Un module moteur 1 classiquement utilisé, visible à la figure 1, comprend classiquement 3 éléments : un stator 2, une bobine composée d'un noyau bobine 3 enroulé d'un fil bobine 4 et un troisième élément 5 qui est le module électronique comprenant un circuit imprimé sur lequel le quartz et le microcontrôleur sont assemblés.

Dans l'exécution visible à la figure 1, le stator 2 est rétréci dans sa partie centrale afin de former une zone d'accueil à chaque extrémité. Ces zones d'accueil permettant la fixation du stator 2 avec le noyau bobine 3 autour duquel un fil bobine 4 est enroulé. Le noyau bobine est alors agencé pour que le fil bobine enroulé sur le noyau se loge dans la zone rétrécie du stator.

Le troisième élément qui est le module électronique 5 est alors fixé sur le noyau bobine.

L'inconvénient de cette configuration est qu'elle engendre un encombrement du module moteur. En effet, cette configuration implique d'avoir les trois éléments qui sont empilés les uns sur les autres de sorte que leurs épaisseurs s'additionnent.

Par conséquent, la boîte de la montre doit tenir compte de cette épaisseur pour ses dimensions. US 2015/092522 A1 divulgue un module moteur comprenant un stator formé d'une plaque principale d'une première épaisseur sur lequel est monté un rotor, ledit stator étant réalisé afin de présenter, à chaque extrémité, une zone d'accueil dont l'épaisseur est plus faible que la première épaisseur, un noyau bobine formé d'un barreau d'une seconde épaisseur sur lequel est enroulé un fil bobine formant la bobine du moteur est fixée, le noyau bobine étant fixé sur la zone d'accueil, et un circuit imprimé ayant une troisième épaisseur fixé sur le stator. EP 2 615 509 A1 décrit un stator constitué d'une plaque magnétique comprenant un rotor, un noyau d'enroulement superposé aux deux extrémités déployées du stator et fixé sur une plaque inférieure avec une vis, et une bobine et une bobine autour desquelles un câblage est enroulé.

### RÉSUMÉ DE L'INVENTION

La présente invention a pour but de pallier aux inconvénients de l'art antérieur en proposant un module moteur plus simple et moins encombrant.

A cet effet, l'invention concerne un module moteur selon la revendication 1. Des modes de réalisation préférés sont définis dans les revendications 2-8.

Dans un premier mode de réalisation avantageux, le module moteur est agencé de sorte que l'épaisseur du module moteur assemblé soit égale à l'épaisseur du stator additionnée de l'épaisseur du circuit imprimé ou l'épaisseur des zones d'accueil additionnée de l'épaisseur du noyau bobine et de l'épaisseur du fil bobine enroulé.

Dans un deuxième mode de réalisation avantageux, le module moteur est agencé de sorte que l'épaisseur du stator additionnée de l'épaisseur du circuit imprimé est égale à l'épaisseur des zones d'accueil additionnée de l'épaisseur du noyau bobine et de l'épaisseur du fil bobine enroulé.

Dans un troisième mode de réalisation avantageux, la plaque principale du stator est rétrécie dans sa partie centrale afin de former une zone d'accueil au niveau de chaque extrémité.

Dans un quatrième mode de réalisation avantageux, la plaque principale du stator est réalisée pour avoir une partie centrale et avoir une zone d'accueil au niveau de chaque extrémité, ces zones d'accueil s'étendant sensiblement perpendiculairement par rapport à l'axe longitudinal de la plaque principale pour former un logement dans lequel le noyau bobine y est logé.

Dans un autre mode de réalisation avantageux, le circuit imprimé comprend des pistes conductrices reliant des plages de connexion auxquelles le fil bobine du module moteur est connecté.

Dans un autre mode de réalisation avantageux, le circuit imprimé porte l'unité de contrôle du moteur.

L'invention concerne en outre un mouvement horloger comprenant une platine portant une pile pour alimenter une base de temps et une unité de commande, ladite unité de commande étant montée sur un module électronique pilotant un module moteur coopérant avec des rouages entrainant des moyens d'affichage, caractérisé en ce que le module moteur est le module moteur selon l'une des revendications 1-7.

### BRÈVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un module moteur de l'art antérieur;

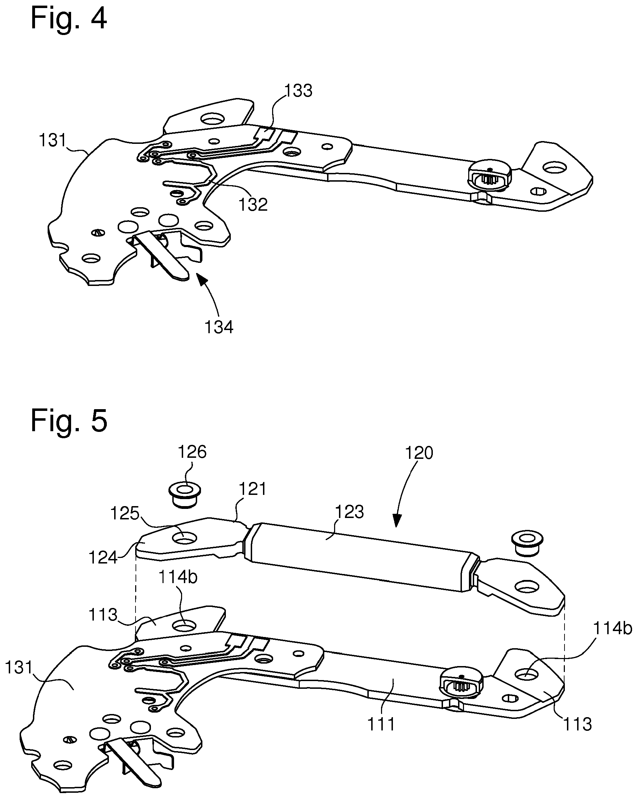

- Les figures 2 à 5 représentent schématiquement un module moteur selon l'invention;

### DESCRIPTION DETAILLÉE

Sur la figure 1, un module moteur selon l'invention est représenté. Ce module moteur est un module apte à être intégré dans un mouvement horloger électronique (non représenté). Un tel mouvement horloger électronique comprenant une platine sur laquelle divers éléments sont agencés. Cette platine est utilisée afin de porter une pile pour alimenter ledit mouvement horloger mais également pour porter un circuit imprimé sur lequel la base de temps et l'unité de commande sont agencées. Cette platine sert également à porter les rouages entraînant les moyens d'affichage comme des aiguilles ou des disques.

Le module moteur est ainsi un module portant le moteur entraînant les rouages et qui est commandé par l'unité de commande, ce module moteur est donc agencé pour être apte à recevoir des signaux électriques et les transformer en mouvement mécanique c'est-à-dire la rotation du moteur couplé aux rouages.

Selon la figure 2, le module moteur 100 est constitué de trois éléments. Le premier élément 110 est l'élément stator/rotor c'est-à-dire le stator et le rotor du moteur. Le second élément 120 est l'élément noyau c'est-à-dire qu'il s'agit d'une plaque en fer doux autour de laquelle un fil bobine est enroulé. Cette bobine fonctionne de concert avec l'ensemble rotor et stator 110. Lorsqu'une impulsion électrique parcourt la bobine, un champ magnétique se propage du noyau dans le stator. Sous l'effet de ce champ, le rotor est dépositionné et fait une rotation d'un demi-tour pour se repositionner sous l'effet de son magnétisme. La polarité de l'impulsion détermine le sens dans lequel le champ magnétique va parcourir le stator. Comme le rotor, après son demi-tour, se positionne en créant des conditions magnétiques opposées à celles du premier pas, il faut une impulsion de signe contraire à la précédente pour permettre de le repousser à nouveau d'un demi-tour (toujours dans le même sens de rotation). Ce cycle se répète inlassablement pour faire tourner le moteur.

Le troisième élément 130 est le circuit imprimé 131. Ce circuit imprimé est la partie qui fait interface entre le moteur et l'unité de commande. En effet, l'unité de commande est l'organe qui envoie les impulsions au moteur, il est donc nécessaire d'avoir des moyens permettant un contact électrique entre les deux. Dans le cas présent, un circuit imprimé est utilisé. Ce circuit imprimé est utilisé pour porter au moins deux pistes conductrices coopérant avec des plages de connexion ou des connecteurs pour relier l'unité de commande à la bobine.

Le premier élément 110, visible aux figures 2 et 3, comprend un stator 111 ayant une première épaisseur E1. Ce stator 111 se présente sous la forme d'une plaque principale ayant une partie centrale 112 et est réalisé de sorte à former une zone d'accueil 113 au niveau de chaque extrémité. Ces zones d'accueil 113 s'étendent sensiblement perpendiculairement par rapport à l'axe longitudinal de la plaque principale formant le stator et sont utilisées pour l'assemblage du premier élément 110 avec le second élément 120. En effet, le second élément 120 est constitué d'un noyau bobine 121 ayant une seconde épaisseur E2. Ce noyau bobine 121 se présente sous la forme d'un barreau autour duquel le fil bobine 123 sera enroulé ce qui ajoute une épaisseur supplémentaire E4. De plus, à chaque extrémité de ce barreau, une zone de fixation 124 est agencée. Ces zones de fixation 124 sont avantageusement réalisées afin de coopérer parfaitement avec les zones d'accueil 113 du premier élément 110. Ces zones d'accueil 113 présentent également une épaisseur plus faible que celle du barreau. De même, il pourra être prévu que la forme du stator 111 du premier élément 110 avec les zones d'accueil 113 s'étendant perpendiculairement à la partie centrale entraînent l'apparition d'un logement pour y loger le fil bobine enroulé 123 du second élément 120.

Avantageusement selon l'invention, les zones d'accueil 113 du premier élément 110 présentent une épaisseur E'1 plus faible que l'épaisseur E1 de la partie centrale. Cette caractéristique permet alors de diminuer l'épaisseur de l'ensemble formé par le premier élément 110 et le second élément 120.

Pour la fixation, les zones d'accueil 113 et les zones de fixation 124 peuvent être munies chacune d'un trou traversant pour que des tenons ou rivets puissent être utilisés.

Le troisième élément 130 est donc un circuit imprimé 131 faisant l'interface entre le moteur et l'unité de commande. Ce circuit imprimé 131 se présente sous la forme d'une plaque époxy ayant une troisième épaisseur E3 sur laquelle des pistes conductrices 132 sont agencées. Ce circuit imprimé 131 a donc pour vocation à être intégré dans le module moteur selon l'invention. Dans l'exemple de réalisation de la figure 2, le circuit imprimé 131 comprend deux plages de connexion 133 permettant la connexion, via des fils, à la bobine 121 et des pistes conductrices permettant de les relier à l'unité de contrôle, des brides de contact 134 pourront être agencées pour faire la connexion électrique entre le circuit imprimé 131 et la pile. Le microcontrôleur de l'unité de contrôle pourra être agencé sur le circuit imprimé 131 ou sur un circuit imprimé différent.

Astucieusement selon l'invention, cette configuration permet d'avoir les trois éléments 110, 120, 130 assemblés ensembles de sorte que l'épaisseur E5 du module moteur 100 assemblé est inférieure à la somme des épaisseurs E1, E2 et E3 des trois éléments 110, 120, 130 réunis. Plus particulièrement, les épaisseurs des différents éléments 110, 120, 130 pourront être calculées de sorte que l'épaisseur E1 du stator 111 additionnée de celle E3 du circuit imprimé 131 n'excède pas l'épaisseur E'1 des zones d'accueil additionnée de celle E2 du noyau bobine 121 et de l'épaisseur E4 du fil bobine enroulé. Cela permet d'avoir avantageusement un module moteur 100 dont l'épaisseur est réduite de façon significative par rapport à un module moteur connu dans lequel son épaisseur est la somme des épaisseurs des éléments qui le composent, la présente invention proposant un agencement particulier permettant une optimisation de l'espace.

Pour le montage de ce module moteur 100, la première étape consiste à se munir du stator 111 comme visible à la figure 3. Ce stator 111 est usiné afin de présenter des trous 114 servant pour les fixations. Le stator comprend alors des trous 114a pour la fixation du circuit imprimé et des trous 114b pour la fixation de l'élément noyau. Le stator 111 est également prémonté pour intégrer le rotor.

Dans une seconde étape, on se munit du circuit imprimé 131, ce dernier ayant subi les étapes pendant lesquelles les pistes conductrices 132, les plages de connexion 133 et les brides de contact 134 sont réalisées et fixées. Par ailleurs, le circuit imprimé 131 est usiné pour présenter des trous pour la fixation, ces trous étant agencés sur la plaque de sorte à permettre une coopération avec les trous 114a pour la fixation du circuit imprimé du stator 111. Cette seconde étape se poursuit en fixant le circuit imprimé 131 et le stator 111. Ces deux éléments 110, 130 sont alors agencés l'un sur l'autre et alignés pour que les trous se trouvent en regard les uns des autres. Le tout est alors fixé avec des rivets ou tenons 126.

Dans une troisième étape, l'élément bobine 120 comprenant le noyau bobine 121 munie du fil bobine enroulé 123 et de trous de fixation 125 est monté. Ces trous de fixation 125 sont agencés pour être utilisés en coopération avec des trous de fixation 114b agencés sur les zones d'accueil 113 au niveau de chaque extrémité du stator 111. Ces deux éléments sont maintenus ensemble via des tenons ou rivets 126.

## Revendications

1. Module moteur comprenant un stator formé d'une plaque principale d'une première épaisseur (E1) sur lequel est monté un rotor, ledit stator (111) étant réalisé afin de présenter, à chaque extrémité, une zone d'accueil (113) dont l'épaisseur (E'1) est plus faible que la première épaisseur (E1), un noyau bobine (121) formé d'un barreau d'une seconde épaisseur (E2) sur lequel est enroulé un fil bobine (123) formant la bobine du moteur est fixée, le noyau bobine (21) étant fixé sur la zone d'accueil, et un circuit imprimé (131) ayant une troisième épaisseur (E3) fixé sur le stator, **caractérisé en ce que** le noyau bobine (21) est fixé à la zone d'accueil du stator (111) via des premiers trous (114b), **en ce que** le circuit imprimé (131) est fixé à la plaque principale du stator (111) via des second trous (114a), et **en ce que** les premier trous (114b) sont espacés des second trous (114a), et **en ce que** l'épaisseur (E5) du module moteur (100) assemblé est inférieure à la somme des épaisseurs (E1, E2, E3) du stator (111), du noyau bobine (121 ) et du circuit imprimé (131) réunis.

2. Module moteur selon la revendication 1 1, **caractérisé en ce qu'**il est agencé de sorte que l'épaisseur (E5) du module moteur (100) assemblé est égale à l'épaisseur (E1) du stator 111 additionnée de l'épaisseur (E3) du circuit imprimé (131) ou l'épaisseur (E'1) des zones d'accueil (113) additionnée de l'épaisseur (E2) du noyau bobine (121) et de l'épaisseur (E4) du fil bobine enroulé (123).

3. Module moteur selon la revendication 2, **caractérisé en ce qu'**il est agencé de sorte que l'épaisseur (E1) du stator 111 additionnée de l'épaisseur (E3) du circuit imprimé (131) est égale à l'épaisseur (E'1) des zones d'accueil (113 et 114) additionnée de l'épaisseur (E2) du noyau bobine (121) et de l'épaisseur (E4) du fil bobine enroulé (123).

4. Module moteur selon l'une des revendications précédentes, **caractérisé en ce que** la plaque principale du stator (111) est rétrécie dans sa partie centrale (112) afin de former une zone d'accueil (113) au niveau de chaque extrémité.

5. Module moteur selon la revendication 4, **caractérisé en ce que** la plaque principale du stator est réalisée pour avoir une partie centrale 112 et avoir une zone d'accueil 113 au niveau de chaque extrémité, ces zones d'accueil 113 s'étendant sensiblement perpendiculairement par rapport à l'axe longitudinal de la plaque principale pour former un logement dans lequel le noyau bobine (121) y est logé.

6. Module moteur selon l'une des revendications précédentes, **caractérisé en ce que** le circuit imprimé (131) comprend des pistes conductrices (132) reliant des plages de connexion (133) auxquelles le fil bobine (123) du module moteur est connecté.

7. Module moteur selon l'une des revendications précédentes, **caractérisé en ce que** le circuit imprimé (131) porte l'unité de contrôle du moteur.

8. Mouvement horloger comprenant une platine portant une pile pour alimenter une base de temps et une unité de commande, ladite unité de commande étant montée sur un module électronique pilotant un module moteur coopérant avec des rouages entrainant des moyens d'affichage, **caractérisé en ce que** le module moteur est le module moteur selon l'une des revendications précédentes.

## Patentansprüche

1. Motormodul, umfassend einen Stator, der von einer Hauptplatte in einer ersten Dicke (E1) gebildet ist, auf dem ein Rotor angebracht ist, wobei der Stator (111) hergestellt ist, um an jedem Ende einen Empfangsbereich (113) aufzuweisen, dessen Dicke (E'1) geringer als die erste Dicke (E1) ist, einen Spulenkern (121), der von einem Stab in einer zweiten Dicke (E2) gebildet ist, auf dem ein Spulendraht (123) gewickelt ist, der die Spule des Motors bildet, befestigt ist, wobei der Spulenkern (21) auf dem Empfangsbereich befestigt ist, und einen gedruckten Schaltkreis (131) mit einer dritten Dicke (E3), der auf dem Stator befestigt ist, **dadurch gekennzeichnet, dass** der Spulenkern (21) am Empfangsbereich des Stators (111) anhand erster Löcher (114b) befestigt ist, dass der gedruckte Schaltkreis (131) anhand zweiter Löcher (114a) an der Hauptplatte des Stators (111) befestigt ist und dass die ersten Löcher (114b) von den zweiten Löchern (114a) beabstandet sind und dass die Dicke (E5) des zusammengebauten Motormoduls (100) geringer als die Summe der Dicken (E1, E2, E3) des Stators (111), des Spulenkerns (121) und des gedruckten Schaltkreises (131) zusammen ist.

2. Motormodul nach Anspruch 1, **dadurch gekennzeichnet, dass** es derart eingerichtet ist, dass die Dicke (E5) des zusammengebauten Motormoduls (100) gleich der Dicke (E1) des Stators (111) addiert mit der Dicke (E3) des gedruckten Schaltkreises (131) oder der Dicke (E'1) der Empfangsbereiche (113) addiert mit der Dicke (E2) des Spulenkerns (121) und der Dicke (E4) des gewickelten Spulenddrahts (123) ist.

3. Motormodul nach Anspruch 2, **dadurch gekennzeichnet, dass** es derart eingerichtet ist, dass die Dicke (E1) des Stators (111) addiert mit der Dicke (E3) des gedruckten Schaltkreises (131) gleich der Dicke (E'1) der Empfangsbereiche (113 und 114) addiert mit der Dicke (E2) des Spulenkerns (121) und der Dicke (E4) des gewickelten Spulenddrahts (123) ist.

4. Motormodul nach einem der vorangehenden Ansprüche, **dadurch gekennzeichnet, dass** die Hauptplatte des Stators (111) in ihrem zentralen Teil (112) verengt ist, um im Bereich jedes Endes einen Empfangsbereich (113) zu bilden.

5. Motormodul nach Anspruch 4, **dadurch gekennzeichnet, dass** die Hauptplatte des Stators hergestellt ist, um einen zentralen Teil (112) zu haben und einen Empfangsbereich (113) im Bereich jedes Endes zu haben, wobei sich diese Empfangsbereiche (113) im Verhältnis zur Längsachse der Hauptplatte etwa senkrecht erstrecken, um eine Aufnahme zu bilden, in der der Spulenkern (121) dort untergebracht ist.

6. Motormodul nach einem der vorangehenden Ansprüche, **dadurch gekennzeichnet, dass** der gedruckte Schaltkreis (131) Leitungsbahnen (132) umfasst, die Anschlussbereiche (133) verbinden, an die der Spulenddraht (123) des Motormoduls angeschlossen ist.

7. Motormodul nach einem der vorangehenden Ansprüche, **dadurch gekennzeichnet, dass** der gedruckte Schaltkreis (131) die Kontrolleinheit des Motors trägt.

8. Uhrwerk, umfassend eine Werkplatte, die eine Batterie trägt, um eine Zeitbasis und eine Steuereinheit zu versorgen, wobei die Steuereinheit auf einem elektronischen Modul angebracht ist, das ein Motormodul steuert, das mit Räderwerken zusammenwirkt, die Anzeigemittel antreiben, **dadurch gekennzeichnet, dass** das Motormodul das Motormodul nach einem der vorangehenden Ansprüche ist.

## Claims

1. Motor module comprising a stator formed of a main plate of a first thickness (E1) on which is mounted a rotor, said stator (111) being configured in order to have, at each end, a receiving zone (113), the thickness (E'1) of which is less than the first thickness (E1), a coil core (121) formed of a bar of a second thickness (E2) on which is wound a coil wire (123) forming the coil of the motor is fixed, the coil core (21) being fixed to the receiving zone, and a printed circuit (131) having a third thickness (E3) which is fixed to the stator, **characterised in that** the coil core (21) is fixed to the receiving zone of the stator (111) via first holes (114b), **in that** the printed circuit (131) is fixed to the main plate of the stator (111) via second holes (114a), and **in that** the first holes (114b) are spaced from the second holes (114a), and **in that** the thickness (E5) of the assembled motor module (100) is less than the total of the thicknesses (E1, E2, E3) of the stator (111), the coil core (121) and the printed circuit (131) combined.

2. Motor module according to claim 1, **characterised in that** it is arranged such that the thickness (E5) of the assembled motor module (100) is equal to the thickness (E1) of the stator (111) plus the thickness (E3) of the printed circuit (131) or the thickness (E'1) of the receiving zones (113) plus the thickness (E2) of the coil core (121) and the thickness (E4) of the wound coil wire (123).

3. Motor module according to claim 2, **characterised in that** it is arranged such that the thickness (E1) of the stator (111) plus the thickness (E3) of the printed circuit (131) is equal to the thickness (E'1) of the receiving zones (113 and 114) plus the thickness (E2) of the coil core (121) and the thickness (E4) of the wound coil wire (123).

4. Motor module according to any of the preceding claims, **characterised in that** the main plate of the stator (111) is narrowed in its central part (112) in order to form a receiving zone (113) at each end.

5. Motor module according to claim 4, **characterised in that** the main plate of the stator is configured to have a central part (112) and to have a receiving zone (113) at each end, these receiving zones (113) extending substantially perpendicularly relative to the longitudinal axis of the main plate to form a receptacle in which the coil core (121) is accommodated.

6. Motor module according to any of the preceding claims, **characterised in that** the printed circuit (131) comprises conductive tracks (132) which connect connection regions (133) to which the coil wire (123) of the motor module is connected.

7. Motor module according to any of the preceding claims, **characterised in that** the printed circuit (131) bears the controller unit of the motor.

8. Watch movement comprising a base plate bearing a battery for powering a time base and a control unit, said control unit being mounted on an electronic module which controls a motor module which cooperates with gear trains driving display means, **characterised in that** the motor module is the motor module according to any of the preceding claims.
